# EUROPÄISCHE PATENTANMELDUNG

(11) **EP 3 943 220 A1**
(43) Veröffentlichungstag der Anmeldung: **26.01.2022**
(21) Anmeldenummer: 21000201.0
(22) Anmeldetag: 23.07.2021
(51) Int. Cl.: B22F 10/70, B22F 10/20, B22F 10/28, B22F 12/00, B33Y 10/00, B33Y 30/00, B33Y 40/00, B29C 64/153

(54) **VORRICHTUNG UND VERFAHREN FÜR EIN PULVERSYSTEM ZUR VERBESSERTEN PULVERNUTZUNGSEFFIZIENZ IN EINEM ADDITIVEN HERSTELLUNGSVERFAHREN**

(30) Priorität: 24.07.2020 DE 102020004503; 24.07.2020 DE 102020004504
(71) Anmelder: Aixway3D GmbH, 52074 Aachen (DE)
(72) Erfinder: Shen, Liyaowei, 52078 Aachen (DE)

(57) **Zusammenfassung**

Die Erfindung betrifft eine Anlage (10) zum additiven Herstellen von mehrdimensionalen Strukturen mit einem Pulversystem (35) und ein Verfahren (100) zur Nutzung von Pulver zur additiven Herstellung von mehrdimensionalen Strukturen unter Verwendung einer solchen Anlage, umfassend eine räumlich bewegliche Auftragseinheit (20) für Pulver (30), ein Pulversystem zur Bereitstellung des Pulvers und eine Steuereinheit zur Steuerung zumindest der Auftragseinheit und des Pulversystems, wobei das Pulversystem (35) mindestens einen ersten Pulverbehälter und einen zweiten Pulverbehälter umfasst, die dazu vorgesehen sind, jeweils alternierend das aufzutragende Pulver als temporärer Pulvervorrat bereitzustellen bzw. überschüssiges Pulver nach dem Auftragen über die in Bewegungsrichtung der Auftragseinheit gesehen zwischen dem ersten und zweiten Pulverbehälter angeordnete Substratplattform hinaus als temporärer Überlaufbehälter aufzunehmen.

## Beschreibung

Die Erfindung betrifft eine Anlage zum additiven Herstellen von mehrdimensionalen Strukturen mit einem Pulversystem und ein Verfahren zur Nutzung von Pulver zur additiven Herstellung von mehrdimensionalen Strukturen unter Verwendung einer solchen Anlage.

### Stand der Technik

Im Stand der Technik sind additive Herstellungsprozesse bekannt, wie z.B. das 3D Drucken, die ein Ausgangswerkstoff in Pulverform verwenden um eine mehrdimensionale Struktur zu bauen. Der zu verarbeitende Werkstoff kann z.B. durch ein Strahlschmelzverfahren bearbeitet werden um die erwünschte räumliche Struktur zu erhalten. Bekannte Strahlschmelzverfahren sind z.B. Laser Pulver Bed Fusion (LPBF), Elektronenstrahlschmelzen oder selektives Laserintern. Bei einem LPBF Prozess wird der zu verarbeitende Werkstoff in Pulverform durch eine Pulverauftragseinheit in einer dünnen Schicht auf einer Substratplattform aufgebracht. Der aufgebrachte pulverförmige Werkstoff wird mittels Laserstrahlung lokal vollständig umgeschmolzen und bildet nach der Erstarrung eine feste Materialschicht. Anschließend wird die Substratplattform um den Betrag einer Schichtdicke (typischerweise 20 - 100 µm) abgesenkt und es wird erneut Pulver von der Pulverauftragseinheit aufgetragen und durch den Laser gesintert. Dieser Zyklus wird solange wiederholt, bis alle Schichten umgeschmolzen sind und das Bauteil fertig hergestellt ist.

Ein bekanntes Problem bei der Verarbeitung von pulverförmigen Material ist jedoch, dass die Nutzungseffizienz des Pulvers für den Pulverauftrag Optimierungsbedarf aufweist. Im Stand der Technik sind zwei Behälter bekannt, worin in einem ersten Behälter das Pulver und in einem zweiten Behälter eine Substratplattform und das herzustellende Bauteil vorhanden sind. Eine fahrbare Pulverfördereinheit des ersten Behälters schiebt Pulver über eine Auftragsebene und eine Auftragseinheit fährt vom ersten Behälter zum zweiten Behälter und schiebt das Pulver rüber. Überschüssiges Pulver, welches nicht aufgetragen werden sollte oder konnte wird weiter in einen Überlaufbehälter aufgefangen. Das überschüssige Pulver im Überlaufbehälter wird am Ende der additiven Herstellung aus der Anlage herausgenommen, das Pulver nochmal gesiebt, teilweise entsorgt und teilweise für einen nächsten Prozess wieder zur Verfügung gestellt.

Nachteilig an dieser Pulvernutzung ist, dass sie ineffizient ist, da vieles an Pulver gar nicht für die Herstellung verwendet werden kann. Auch ist es aufwendig am Ende des Prozesses das überschüssige Pulver herauszunehmen und dann nochmal zu sieben.

Es wäre daher wünschenswert, wenn eine effektivere Nutzung des Pulvers während einer additiven Herstellung möglich wäre, sodass weniger Pulver verbraucht wird und/oder der Herstellungsvorgang schneller durchgeführt werden kann.

### Zusammenfassung der Erfindung

Eine objektive Aufgabe der Erfindung lautet daher, eine Vorrichtung bereitzustellen, mit der eine effektivere Nutzung des Pulvers während einer additiven Herstellung möglich ist, sodass weniger Pulver verbraucht wird und/oder der Herstellungsvorgang schneller durchgeführt werden kann.

Diese Aufgabe wird gelöst durch eine Anlage zum additiven Herstellen von mehrdimensionalen Strukturen umfassend eine räumlich bewegliche Auftragseinheit für Pulver, ein Pulversystem zur Bereitstellung des Pulvers und eine Steuereinheit zur Steuerung zumindest der Auftragseinheit und des Pulversystems. Die Auftragseinheit ist dazu vorgesehen, eine oder mehrere Pulverschichten in einer Auftragungsebene auf eine Substratplattform oder auf einer bereits mit der Anlage behandelten Pulverschicht aufzutragen. Das Pulversystem umfasst mindestens einen ersten Pulverbehälter und einen zweiten Pulverbehälter, die dazu vorgesehen sind, jeweils alternierend das aufzutragende Pulver als temporärer Pulvervorrat bereitzustellen bzw. überschüssiges Pulver nach dem Auftragen über die in Bewegungsrichtung der Auftragseinheit gesehen zwischen dem ersten und zweiten Pulverbehälter angeordnete Substratplattform hinaus als temporärer Überlaufbehälter aufzunehmen. Die Steuereinheit ist dazu vorgesehen, die Auftragseinheit vom ersten Pulverbehälter als Pulvervorrat über die Substratplattform und den zweiten Pulverbehälter als Überlaufbehälter zu bewegen und von dort in umgekehrter Richtung die Auftragseinheit vom zweiter Pulverbehälter, der dafür nun als Pulvervorrat verwendet wird, über die Substratplattform und den ersten Pulverbehälter, der nun als Überlaufbehälter verwendet wird, zu bewegen. Dadurch kann das überschüssig Pulver direkt nach der Auftragung wieder für einen erneuten Auftrag verwendet werden. Durch die erfindungsgemäße Anlage wird demnach eine effektivere Nutzung des Pulvers während einer additiven Herstellung ermöglicht, sodass weniger Pulver verbraucht wird und/oder der Herstellungsvorgang schneller durchgeführt werden kann.

Unter "Anlage zur additiven Herstellung" versteht man eine Fertigungsanlage in der Material Schicht für Schicht aufgetragen und so mehrdimensionale Strukturen erzeugt werden (3D-Druck). Dabei erfolgt der schichtweise Aufbau computergesteuert aus einem oder mehreren flüssigen oder festen Werkstoffen nach vorgegebenen Maßen und Formen. Beim Aufbau finden physikalische oder chemische Härtungs- oder Schmelzprozesse statt. Typische verwendete Materialien für das 3D-Drucken sind Kunststoffe, Kunstharze, Keramiken und Metalle. Auch können auch Carbon- und Graphitmaterialien für den 3D-Druck verwendet werden. Für die Herstellung von Strukturen aus Metall, die vorwiegend im industriellen Bereich angewandt werden, sind besonders Strahlschmelzanlagen geeignet. Unter Strahlschmelzen versteht man z.B. das Laser Powder Bed Fusion (auch selektives Laserschmelzen genannt), das Elektronenstrahlschmelzen und das selektive Lasersintern.

Eine solche Anlage kann eine Steuereinheit zum Steuern des additiven Herstellprozesses umfassen. Eine solche Steuereinheit kann dabei eine Computereinheit, einen Prozessor, eine Speichereinheit etc. umfassen. Die Steuereinheit ist dazu ausgebildet, die Komponenten der Anlage gemäß eines Steuerprogramms anzusteuern, wozu sie mit diesen auf geeignete Weise verbunden ist, beispielsweise mit geeigneten Datenleitung oder drahtlos z.B. über WLAN. Für die Steuereinheit wird meist durch eine Steuerdatei angewiesen. Diese ist herkömmlicherweise eine CAD Datei, die die zu fertigenden mehrdimensionale Struktur enthält. Die Übergabe der 3D-Modelle von der Steuerdatei (CAD) zu 3D-Druck (CAM) findet meist über eine STL-Schnittstelle statt. Diese bildet Informationen über die Geometriedarstellung ab. Es können alternativ auch andere Dateiformate verwendet werden, um zusätzliche Informationen auszutauschen. Z.B. speichern die Formate VRML und OBJ zusätzlich zur Geometrie noch Farbinformationen. Das AMF-Format (durch die Norm ISO/ASTM 52915 definiert) kann darüber hinaus allgemeine Informationen wie Materialeigenschaften abbilden und erlaubt darüber hinaus die Möglichkeit, gekrümmte Flächen zu speichern. Auch das 3MF-Format, speichert Informationen zusätzlich zu den Geometrieinformationen.

Eine "mehrdimensionale Struktur", worunter vorwiegend dreidimensionale Strukturen zu verstehen sind, können als Bauteile für jegliche Anwendung vorgesehen sein. Zum Beispiel können die Anwendungen für Kunststoffspritzwerkzeuge, Bauteile für die Luft - und Raumfahrttechnik, Spezialwerkzeuge etc. geeignet sein. Der Begriff "mehrdimensionale Struktur" umfasst neben dem fertigen Bauteil auch das unfertige Bauteil, also die Verformung im Pulverbett, während der Fertigung.

Eine "Auftragseinheit" ist eine Vorrichtung, die geeignet ist, um Pulver für das Bauen auf eine Substratplattform aufzutragen. Die Auftragseinheit ist räumlich beweglich relativ zur Anlage ausgestaltet, um Pulver von einem Ort (zum Beispiel einem Pulverbehälter) auf den anderen (z.B. der Substratplattform) zu transportieren und aufzutragen. Verschiedene Ausführungen der Auftragseinheit sind in den weiteren Absätzen ausgeführt.

Unter "Pulver" versteht man den zu verarbeitenden Werkstoff, welcher in Pulverform verwendet wird. Das Pulver kann z.B. hauptsächlich aus einem Material aus Metall oder Polymeren bestehen. Das Pulver wird bei der Herstellung Schicht für Schicht auf eine Substratplattform aufgetragen. Pro einmal Auftragen durch die Auftragseinheit wird eine "Pulverschicht" auf entweder der Substratplattform (erste Schicht) oder auf eine bereits mit der Anlage behandelten Pulverschicht aufgetragen. Die aufgetragene Pulverschicht weist typischerweise eine Schichtdicke von z. B. 10 µm oder bevorzugt < 20 µm auf. Unter "Pulverschicht" kann man daher auch die Zusammensetzung aller Schichten Pulver, die bereits von der Anlage behandelt wurde, verstehen. Theoretisch können auch "mehrere Pulverschichten" aufgetragen werden, bevor diese von der Anlage behandelt werden (z.B. durch Lasern). Das Pulver kann hauptsächlich aus Pulverkörner desselben Materials bestehen. Eine Materialmischung ist jedoch auch möglich. Die Pulverkörner können sich jedoch in ihrer Größe, Form und ihrer Kornfraktion innerhalb des aufzutragenden/verwendeten Pulvers unterscheiden. Diese Inhomogenität des Pulvers ist meistens durch die Herstellung und/oder durch das Nachbehandeln (z.B. durch Sieben, Windsichten etc.) des Pulvers bedingt. Besonders kleine und/oder spratzige Pulverkörner neigen zur Agglomeration miteinander.

Ein "Pulverbehälter" ist geeignet um das Pulver aufzunehmen und zu fördern. Die Form eines Pulverbehälters ist dabei variabel. Bevorzugter Weise weist der Pulverbehälter eine zylindrische Form auf. Diese hat den Vorteil, dass eine Abdichtung des Behälters zu der Wandung durch Standard-Dichtungselemente ausgeführt werden kann, welches die Herstellung einfach und kostengünstig macht. Der Pulverbehälter muss jedoch nicht zylindrisch ausgestaltet sein. Der Pulverbehälter kann auch andere geometrische Formen (wie z.B. ein Quader, abgerundeter Quader, Tetraeder) aufweisen, die geeignet sind Pulver aufzunehmen. Auch kann der Pulverbehälter mit einem Griff ausgestattet sein, um ein Benutzen, wie z.B. das rein und rausholen aus der Anlage zu erleichtern. Der Pulverbehälter kann aus Leichtmetall wie z.B. einer Aluminiumlegierung Materialien ausgestaltet sein. Dies hat den Vorteil, dass der Behälter besonders leicht ausgestaltet werden kann.

Pulverbehälter können (mindestens der erste und mindestens der zweite) eine fahrbare Pulverfördereinheit umfassen, die von der Steuereinheit gesteuert je nach Funktionsweise des jeweiligen Pulverbehälters als temporären Pulvervorrat oder Überlaufbehälter nach oben oder unten fährt. Beim Hochfahren der Pulverfördereinheit wird eine Menge an Pulver für das Pulverauftragen bereitgestellt, sodass in dem Moment der Pulverbehälter als Pulvervorrat verwendet wird. Beim Nach-Unten-Fahren der Pulverfördereinheit, wird der Behälter vergrößert, sodass überschüssiges Pulver aufgenommen werden kann. In diesem Sinne wird der Pulverbehälter als Überschussbehälter verwendet. Dies ermöglicht das kein Extrabehälter mehr vorhanden sein muss, um das überschüssige Pulver aufzunehmen. Der Extrabehälter müsste sonst nach jedem Herstellungsprozess aus der Anlage herausgenommen, das Pulver entfernt und wieder eingebaut werden.

Unter "Substratplattform" versteht man eine Bauplattform für das Tragen der herzustellenden Struktur. Die Substratplattform ist so ausgestaltet, dass sie relativ zur Anlage beweglich ist. Dies ermöglicht ein weiteres Auftragen einer Pulverschicht in eine Auftragsebene, wenn die bereits behandelte Pulverschicht dafür z.B. nach unten bewegt (gesenkt) wird. Die Substratplattform ist meistens so ausgestaltet, dass sie sich mit einer Dichtung innerhalb einer umschlossenen Einheit bewegt. Diese umschließende Einheit kann ein Behälter sein, wobei der Behälter z.B. in Zylinderform ausgeführt sein kann. Der Behälter kann analog zu einem erfindungsgemäßen Pulverbehälter ausgestaltet sein, wobei zudem die Substratplattform analog zu einer erfindungsgemäßen fahrbaren Pulverfördereinheit ausgestaltet sein kann. Die Substratplattform kann jedoch theoretisch auch frei im Raum angeordnet sein.

In einer Ausführungsform kann die Substratplattform von der Steuereinheit gesteuert nach jedem Auftragen um die gerade aufgetragene Schicht nach unten gesenkt werden. Dies ermöglicht ein erneutes Auftragen von Pulver durch die Auftragseinheit.

In einer Ausführungsform kann ein erstes Material im ersten Pulverbehälter und ein zweites Material im zweiten Pulverbehälter vor dem Auftragen bereitgestellt sein. In einer spezifischen Ausführungsform kann das erste Material gleich dem zweiten Material sein. Dies ist herkömmlicherweise der Fall. In einer alternativen Ausführungsform kann das erste Material unterschiedlich vom zweiten Material sein. Dies ermöglicht zum Beispiel eine in-situ Multimaterialverarbeitung der Anlage. Das Mischverhältnis der verschiedenen Materialien zueinander kann unter Verwendung von den mindestens zwei Überlaufbehälter durch die Steuerung der Steuereinheit flexible gestaltet werden. Dabei ist es wichtig, dass die Überlaufbehälter an den Enden der Bewegung der Auftragseinheit angeordnet sind. Diese Ausführungsform hat den Vorteil, dass man dadurch unter anderem herausfinden kann, wie die einzelnen Verbundsmechanismen zwischen unterschiedlichen Materialien funktionieren, welches durch besonders dünne Schichtverbundssysteme gut zu beobachten ist. Dies ist unter anderem für Forschungszwecke interessant. Außerdem hat die Ausführungsform den Vorteil, dass man für die Anwendung ein duktiles Material mit einem spröden Material metallurgisch zu Schichten verbinden kann um die Vorzüge beider Materialien auszunutzen.

In einer weiteren Ausführungsform kann die Menge an befördertem Pulver oberhalb der Auftragungsebene des Pulvervorrats eine Schichtdicke von einem Faktor größer gleich 1.2, besonders einem Faktor 2, besonders bevorzugt einem Faktor 3 oder 4, einer Schichtdicke einer aufgetragenen und/oder aufzutragenden Pulverschicht auf der Substratplattform entsprechen. Um den zweiten Pulverbehälter sinnvoll als Pulvervorrat verwenden zu können, muss eine Mindestmenge an Pulver im Behälter vorhanden sein. Daher ist es von Vorteil, wenn eine abgepasste Menge an Pulver vom ersten Behälter zum zweiten geschoben wird. Herkömmlicherweise wird ein Faktor von 1.2 der aufzutragenden Schichtdicke vom Pulvervorrat befördert, um genug Pulver inklusive der an den Rändern der Substratplattform runterfallenden Pulver zu berücksichtigen. Jedoch wird die mehrdimensionale Struktur in der Herstellung an lokalen Orten geschmolzen, sodass sich gewisse "Täler" ergeben. Je nach Struktur können diese Täler relativ groß ausfallen, sodass eine 1.2 Fache Menge an Pulver nicht ausreicht um die Täler zu befüllen und die gewünschte Pulverschichtdicke aufzutragen. Auch können lokale Stellen teilweise mehr Pulver benötigen, weil an den Stellen eine größere Fläche zu belichten ist. Daher ist es von Vorteil eine deutlich größere Menge an Pulver wie z.B. das 2, 3 oder 4-Fache der aufzutragenden Pulverschicht für den Pulverauftrag bereitzustellen. Dies ist jedoch nur mit einer erfindungsgemäßen Anlage von Vorteil, da die erfindungsgemäße Vorrichtung das überschüssige Pulver während der Herstellung wieder verwenden kann. In einem herkömmlichen Pulversystem nach dem Stand der Technik würde das überschüssige Pulver an den Rändem runterfallen und/oder in einem Überschussbehälter bis zum nächsten Prozess ungebraucht gelagert werden.

Um einen besonders hochqualitatives Bauteil (mehrdimensionale Struktur) zu erhalten, sollte die aufgetragene Pulverschicht besonders glatt sein. In einer Ausführungsform kann daher die erfindungsgemäße Anlage eine Anregungseinheit umfassen, die dazu vorgesehen ist, beim Auftragen des Pulvers Anhaftungen einzelner Pulverkörner zueinander und/oder zu einer bereits mit der Anlage behandelten Pulverschicht aufzubrechen, sodass die Auftragseinheit eine glatte Pulverschicht auf die Substratplattform und/oder auf die vorherige Pulverschicht auftragen kann.

Durch eine "Anregung" kann die Anhaftung einzelner Pulverkörner zueinander aufgebrochen werden, um der Agglomeration entgegen zu steuern. Die Anregung wird, vorzugsweise zeitweise, beim Auftragen des Pulvers eingesetzt, um die Anhaftung einzelner Pulverkörner zueinander und/oder zu einer bereits mit der Anlage behandelten Schicht aus vormals Pulverkörner aufzubrechen. Die Anregung kann ferner auch nur für das Glätten einer Pulverschicht verwendet werden, ohne dass ein Auftragen stattfindet. Eine Anregung muss sich nicht zwangsläufig auf Vibrationen beschränken, sie kann auch durch z.B. eine Änderung einer Temperatur ausgeführt werden.

In einer Ausführungsform kann die Anregungseinheit eine Vibrationseinheit umfassen, die mittels Schwingung die Anhaftungen aufbricht. Durch die Schwingungen (auch "Vibrationen" möglich) können die Bindungen zwischen den Pulverkörner besonders effizient gebrochen werden. Die Schwingungen können pneumatisch und/oder elektromagnetisch und/oder durch Ultraschall erzeugt werden. Die pneumatische Anregung kann mit Hilfe eines Gases, z.B. Argon bei der Auftragung erfolgen. Eine Vibrationseinheit mit pneumatischer Anregung ist von Vorteil, da diese klein und kompakt, ohne großen technischen Aufwand und ohne viele zusätzliche Komponenten z.B. in eine Auftragseinheit zu integrieren ist. Nachteilig ist an der pneumatischen Anregung, dass die Auftragsgeschwindigkeit relativ gering ist (bei ca. 20 mm/s) und die Qualität des Glättens im Gegensatz zum Ultraschall schlechter ausfällt. Eine Frequenz der pneumatischen Anregung kann bei ca. 200 Hz liegen. Bei einer elektromagnetischen Anregung hat man den Vorteil, kein Gas zu benötigen. Auch ist die elektromagnetische Anregung technisch einfach zu realisieren. Sie hat jedoch den Nachteil, dass sie nicht für alle Metalle geeignet ist, wie z.B. nicht für Metalle mit ferromagnetischer Eigenschaft. Eine Anregung mit Ultraschall hat deutliche Vorteile bei der Auftragsgeschwindigkeit. Diese kann mehr als 200 mm/s betragen, also mehr als das Zehnfache einer herkömmlichen Auftragsgeschwindigkeit einer Auftragseinheit ohne Anregung. Die Frequenzen des Ultraschalls kann z.B. 35 kHz betragen, welches für Pulverkörner der Größe 2 µm (mittlerer Durchmesser) geeignet ist. Neben dem guten Durchsatz hat Ultraschall auch den Vorteil, dass die Qualität der Glättung besonders gut ist. Demnach kann die Vibrationseinheit dazu geeignet sein, einzelne solcher Schwingungen und/oder eine Kombination solcher Schwingungen zu erzeugen. Die Anregung erfolgt aus einer Richtung oberhalb der Substratplattform (also oberhalb der Pulverschicht), damit mindestens die oberste Pulverschicht der bereits behandelten Pulverschicht angeregt wird. Die Anregung besitzt ferner mindestens eine Frequenz. In einer Ausführungsform überlappt die Frequenz der Anregung nicht mit einer Resonanzfrequenz der Anlage. Dies verhindert ein Beschädigen der Anlage durch die erzeugte Schwingung. In einer weiteren Ausführungsform kann die Frequenz der Schwingung eine Wellenlänge besitzen, die mit einer Korngröße des Pulvers korreliert und/oder einer Auftragsgeschwindigkeit der Auftragseinheit entlang einer Auftragsrichtung korreliert. Die Amplitude der Schwingungen korreliert dabei mit der Frequenz und somit auch der Auftragsgeschwindigkeit der Auftragseinheit, sodass die Größe der einzelnen Körner mit der schwingenden Amplitude in der Größenordnung übereinstimmt. Dies hat den Vorteil, dass die Geschwindigkeit beim Auftragen ohne Verlust an Qualität gesteigert werden kann. Daher kann durch diese Ausführungsform die Effizienz und Durchsatz bei der Herstellung erhöht werden. In einer spezifischen Ausführungsform kann die Frequenz der Anregung zwischen 40 Hz bis 100 kHz betragen. Das hat den Vorteil, dass Korngrößen von unter 20 µm besonders effizient aufgetragen werden können.

In einer Ausführungsform kann die Anregungseinheit der erfindungsgemäßen Anlage ortsfest relativ zu der Pulverschicht und/oder zu der Substratplattform angeordnet sein. Dies kann strukturelle Vorteile mit sich bringen, wie z.B. wenn die Anregungseinheit mit der Substratplattform verbunden oder in dieser integriert ist. Dies kann realisiert durch eine vibrierende Substratplattform realisiert sein. Diese Ausführungsform hat jedoch den Nachteil, dass die Wirkung der Vibration nachlässt, je mehr das zu fertigende Bauteil in die Höhe wächst. Denn die Pulverschichten würden im Fall einer vibrierenden Substratplattform zur Dämpfung der Anregung beitragen. Auch ist die technische Realisierung in dem Sinne schwierig, als dass das Pulver an den Rändern des Substratplattforms durch die Vibrationen runterrieseln kann. Daher kann in einer alternativen Ausführungsform die Anregungseinheit räumlich beweglich relativ zu der Pulverschicht und/oder zu der Substratplattform angeordnet sein. Diese Ausführungsform hat den Vorteil, dass die Stärke der Anregung auf die Pulverschichten nicht durch die Bauhöhe der mehrdimensionalen Struktur beeinflusst wird. Auch ermöglicht diese Ausführungsform, dass z.B. die Auftragseinheit die Anregungseinheit umfassen kann. Dadurch ist auch eine kompakte Bauform möglich.

In einer Ausführungsform kann die Auftragseinheit eine Anregungseinheit laut den vorhergehenden Ausführungen umfassen.

In einer Ausführungsform umfasst die Auftragseinheit zusätzlich ein Glättewerkzeug. Das Glättewerkzeug wird für das physikalische Glätten der aufgetragenen und/oder der bereits mit der Anlage behandelten Pulverschicht verwendet. Das Glättewerkzeug kann eine Schleifeinheit, eine Silikon-Lippe, ein Kunststoffbalken, eine Bürste oder eine Metallkante umfassen. Die Silikon-Lippe ist besonders gut geeignet für geringe Frequenzen bei der Anregung, da sie sehr weich ist. Der Kunststoffbalken weist ähnliche Vorteile auf. Eine Bürste ist dagegen gut geeignet für unruhige Prozesse. Eine Metallkante ist gut geeignet, wenn die Prozesse schon stabil eingefahren sind. In einer vorteilhaften Ausführungsform weist die Schleifeinheit ein Material mit einem gewissen Härtegrad auf, welches geeignet für Ultraschallschleifen und/oder Polieren ist. Dabei kann bevorzugter Weise die Schleifeinheit ein herkömmlicher Schleifstein sein. Die Eigenschaft der besonderen Härte beim Schleifeinheit ist besonders bei einer Anwendung in hohen Frequenzbereichen geeignet, wie z.B. bei Ultraschall, da sie besonders stabil ist. Zudem ist ein herkömmlicher Schleifstein, der für ein physikalisches Schleifen vorgesehen ist, kostengünstig zu erlangen. Die Schleifeinheit kann aus Keramik sein. Weiterhin kann die Schleifeinheit aus Aluminiumoxid oder Diamant sein.

Das Glätten der Pulverschicht wird auch erschwert durch die inhomogene Zusammensetzung des Pulvers. In einer Ausführungsform ist die erfindungsgemäße Anlage auch dazu geeignet, Pulverschichten zu glätten, wenn mindestens ein Teil des verwendeten Pulvers eine Eigenschaft zur Agglomeration und/oder eine spratzige Struktur aufweist. Besonders neigen kleine Pulverkörner mit einer Korngröße < 20 µm zur Agglomeration. Daher ist die erfindungsgemäße Anlage besonders geeignet für Pulver, die eine Korngröße von < 20 µm aufweisen, wovon vorzugsweise mindestens ein Teil des verwendeten Pulvers eine Korngröße von < 2 µm aufweist. Eine spratzige Struktur besitzen Pulverkörner, die nicht sphärisch ausgebildet sind und/oder Ecken und Spitzen aufweisen ("spratzige Pulverkörner"). Auch spratzige Pulverkörner können zur Agglomeration neigen, ohne, dass die Korngröße besonders klein ist. Die Korngröße von Pulverkörner kann beispielsweise nach EN ISO 14688 bestimmt werden.

In einer Ausführungsform kann die erfindungsgemäße Anlage eine Dämpfungseinheit sein, die dazu ausgestaltet ist, eine Übertragung der Anregung auf Anlagenkomponenten außerhalb der Anregungseinheit zu reduzieren, umfassen. Die Dämpfungseinheit hat den Vorteil, besonders die Schwingungen der Anregungseinheit in unvorteilhafte Richtungen der Anlage abzudämpfen und die Anlage damit zu schützen. Besonders die Achsen der Anlage sind empfindlich gegenüber Schwingungen, die durch die Vibrationseinheit erzeugt werden. Falls die Anregungseinheit in der Auftragseinheit integriert ausgeführt ist, gilt es vor allem in den Richtungen oberhalb der Pulverschicht zur Bewegungsachse der Anlage zu dämpfen. Dabei kann die Auftragseinheit über einen Halter an Führungen zur Ausführung einer definierten Bewegung der Auftragseinheit gehalten sein, wobei der Halter im Falle der Anregungseinheit angeordnet in der Auftragseinheit als Dämpfungseinheit oder als Teil davon ausgeführt ist. Der Halter kann aus einem weichen Material hergestellt sein, welches Schwingungen gut absorbiert. Der Halter kann daher zusätzlich zum Stabilisieren und Halten der Auftragseinheit auch die Funktion besitzen, zur Dämpfung beizutragen. Für den Schutz und die Langlebigkeit der Anlage ist daher die Dämpfungseinheit vom Vorteil.

In einer Ausführungsform kann die erfindungsgemäße Anlage dazu ausgestaltet sein, ein selektives Laserschmelzen oder/und ein Elektronenstrahlschmelzen auszuführen. Besonders bei diesen Verfahren wird Pulver mit verschiedenen Korngrößen und Formen verwendet. Dazu gehören auch Pulver mit kleinen Korngrößen und/oder spratziger Form. Eine glatte Oberfläche ist besonders vom Vorteil für die Qualität des hergestellten Bauteils (mehrdimensionale Struktur).

Die Aufgabe wird außerdem gelöst durch ein Verfahren zum additiven Herstellen von mehrdimensionalen Strukturen durch eine Anlage gemäß einem der voranstehenden Ansprüche, umfassend eine räumlich bewegliche Auftragseinheit für Pulver, ein Pulversystem zur Bereitstellung des Pulvers und eine Steuereinheit zur Steuerung zumindest der Auftragseinheit und des Pulversystems, wobei das Pulversystem mindestens einen ersten Pulverbehälter und einen zweiten Pulverbehälter umfasst, umfassend die Schritte: Bereitstellen eines temporären Pulvervorrats und eines temporären Überlaufbehälters jeweils alternierend durch den ersten und den zweiten Pulverbehälter; Bewegen der Auftragseinheit vom jeweiligen Pulvervorrat in Richtung des jeweiligen Überlaufbehälters durch die Steuereinheit; Auftragen einer oder mehrere Pulverschichten in einer Auftragungsebene auf eine Substratplattform oder auf einer bereits mit der Anlage behandelten Pulverschicht anhand des durch den Pulvervorrat bereitgestellten Pulvers, wobei die Substratplattform zwischen dem Pulvervorrat und dem Überlaufbehälter angeordnet ist; Aufnehmen von überschüssigem Pulver nach dem Auftragen durch die Auftragseinheit in Bewegungsrichtung gesehen über die Substratplattform hinaus durch den Überlaufbehälter; und Bewegen der Auftragseinheit in umgekehrter Richtung, wobei der vormalige Überlaufbehälter nun als Pulvervorrat verwendet wird, zu dem vormaligen Pulvervorrat, der nun als Überlaufbehälter verwendet wird.

Hiermit wird durch das erfindungsgemäße Verfahren eine effektivere Nutzung des Pulvers während einer additiven Herstellung ermöglicht, sodass weniger Pulver verbraucht wird und/oder der Herstellungsvorgang schneller durchgeführt werden kann.

Alle Merkmale des erfindungsgemäßen Verfahrens, die mit den Merkmalen der erfindungsgemäßen Anlage korrelieren, weisen auch mindestens die entsprechenden Vorteile auf.

In einer Ausführungsform kann das erfindungsgemäße Verfahren einen weiteren Schritt eines Absenkens der Substratplattform durch die Steuereinheit um eine Dicke der gerade aufgetragenen Pulverschicht nach jedem auftragenden Passieren der Auftragseinheit, umfassen. Bei Strahlschmelzverfahren kann dadurch die mehrdimensionale Struktur Schritt für Schritt auf der Substratplattform aufgebaut werden.

In einer weiteren Ausführungsform kann das erfindungsgemäße Verfahren einen weiteren Schritt eines Aufbrechens von Anhaftungen einzelner Pulverkörner zueinander und/oder zu einer bereits mit der Anlage behandelten Pulverschicht durch eine Anregungseinheit während des Auftragens des Pulvers, sodass die Auftragseinheit eine glatte Pulverschicht auf die Substratplattform und/oder auf die vorherige Pulverschicht auftragen kann, umfassen.

In einer vorteilhaften Ausführungsform können die oben genannten Schritte wiederholt werden, bis die mehrdimensionale Struktur fertig hergestellt ist.

Die voranstehenden Ausführungsformen können in einer beliebigen Reihenfolge auch abweichend von den Anspruchsrückbezügen kumulativ oder einzeln miteinander kombiniert werden.

### Kurze Beschreibung der Figuren

- **Fig. 1**: **a)** Schematische Darstellung einer Ausführungsform der erfindungsgemäße Anlage mit Pulversystem, Auftragseinheit und Steuereinheit; und **b)** Detaillierte Ansicht von a);
- **Fig. 2**: Eine Ausführungsform einer erfindungsgemäßen Auftragseinheit mit Anregungseinheit;
- **Fig. 3**: Eine Ausführungsform eines erfindungsgemäßen Verfahrens;
- **Fig. 4**: Eine Ausführungsform des erfindungsgemäßen Verfahrens; und
- **Fig. 5**: **a)** Eine Ausführungsform eines erfindungsgemäßen Pulversystems und **b)** Erfindungsgemäßer Anlage.

### Detaillierte Beschreibung der Figuren

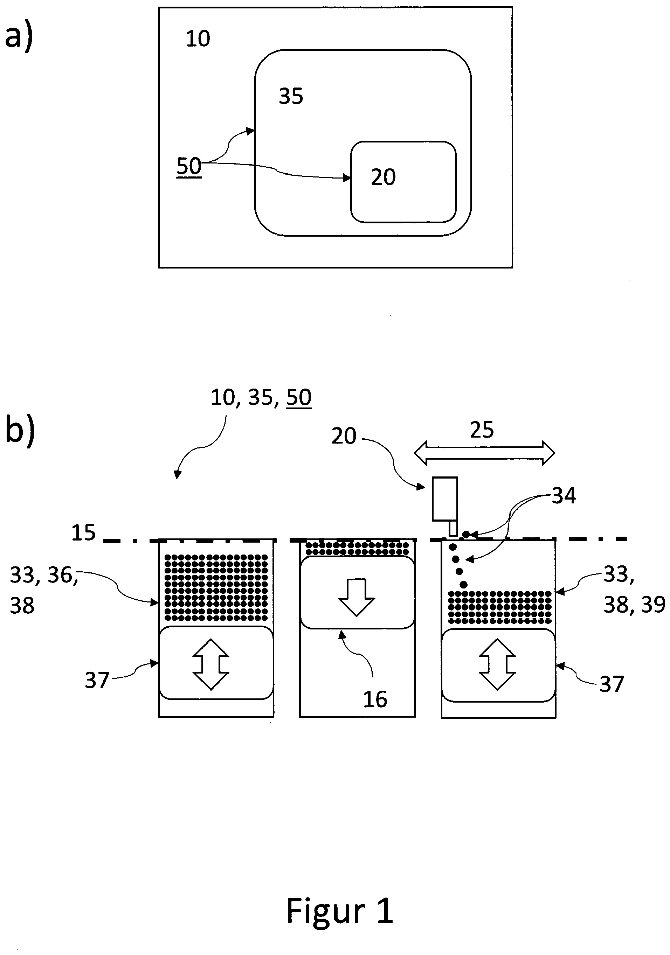

Figur 1a) und b) zeigen eine erfindungsgemäße Anlage 10 zum additiven Herstellen von mehrdimensionalen Strukturen umfassend eine räumlich bewegliche Auftragseinheit 20 für Pulver 30, ein Pulversystem 35 zur Bereitstellung des Pulvers 30 und eine Steuereinheit 50 zur Steuerung zumindest der Auftragseinheit 20 und des Pulversystems 35. Die Auftragseinheit 20 ist dazu vorgesehen, eine oder mehrere Pulverschichten in einer Auftragungsebene 15 auf eine Substratplattform 16 oder auf einer bereits mit der Anlage behandelten Pulverschicht aufzutragen. Das Pulversystem 35 umfasst mindestens einen ersten Pulverbehälter 36 und einen zweiten Pulverbehälter 39, die dazu vorgesehen sind, jeweils alternierend das aufzutragende Pulver als temporärer Pulvervorrat 33 bereitzustellen bzw. überschüssiges Pulver nach dem Auftragen über die in Bewegungsrichtung der Auftragseinheit 20 gesehen zwischen dem ersten und zweiten Pulverbehälter 36, 39 angeordnete Substratplattform 16 hinaus als temporärer Überlaufbehälter 38 aufzunehmen. Die Steuereinheit 50 ist dazu vorgesehen, die Auftragseinheit 20 vom ersten Pulverbehälter 36 als Pulvervorrat 33 über die Substratplattform 16 und den zweiten Pulverbehälter 39 als Überlaufbehälter 38 zu bewegen und von dort in umgekehrter Richtung die Auftragseinheit 20 vom zweiter Pulverbehälter 39, der dafür nun als Pulvervorrat 33 verwendet wird, über die Substratplattform 16 und den ersten Pulverbehälter 36, der nun als Überlaufbehälter 38 verwendet wird, zu bewegen. Die Pulverbehälter 36, 39 können jeweils eine fahrbare Pulverfördereinheit 37 umfassen, die von der Steuereinheit 50 gesteuert je nach Funktionsweise des jeweiligen Pulverbehälters 36, 39 als temporären Pulvervorrat 33 oder Überlaufbehälter 38 nach oben oder unten (Pfeile) fährt. Die Substratplattform 16 kann von der Steuereinheit 50 gesteuert nach jedem Auftragen um die gerade aufgetragene Schicht nach unten gesenkt werden. Erst nach der Fertigung des Bauteils kann die Substratplattform wieder nach oben gefahren werden um den Fertigungsprozess neu zu beginnen. Die Menge an befördertem Pulver oberhalb der Auftragungsebene 15 des Pulvervorrats 36, 39 kann eine Schichtdicke von einem Faktor größer gleich 1.2, besonders einem Faktor 2, besonders bevorzugt einem Faktor 3 oder 4, einer Schichtdicke einer aufgetragenen und/oder aufzutragenden Pulverschicht auf der Substratplattform 16 entsprechen.

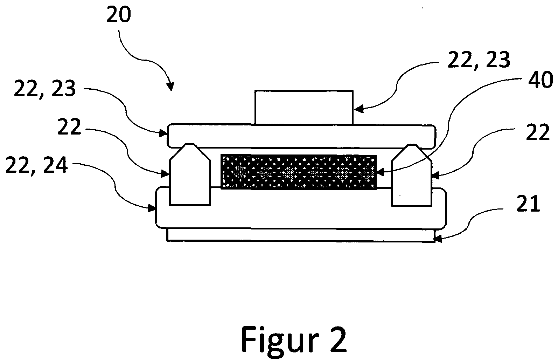

Figur 2 zeigt eine erfindungsgemäße Auftragseinheit 20, die eine Anregungseinheit 40 umfasst. Die Anregungseinheit 40 ist dazu vorgesehen, beim Auftragen des Pulvers Anhaftungen einzelner Pulverkörner zueinander und/oder zu einer bereits mit der Anlage behandelten Pulverschicht aufzubrechen, sodass die Auftragseinheit 20 eine glatte Pulverschicht auf die Substratplattform 16 und/oder auf die vorherige Pulverschicht auftragen kann. Dabei ist in dieser Ausführungsform die Auftragseinheit wie folgt ausgestaltet (von oben nach unten): Die Auftragseinheit 20 der Anlage 10 verfügt über einen Halter 23, an Führungen zur Ausführung einer definierten Bewegung der Auftragseinheit 20 gehalten ist. Der Halter 23 kann als Dämpfungseinheit 22 oder als Teil davon ausgeführt sein, da die Anregungseinheit in der Auftragseinheit in dieser Ausführungsform angeordnet ist. Ferner umfasst die Ausführungsform eine Dämpfungseinheit 22, die dazu ausgestaltet ist, eine Übertragung der Anregung auf Anlagenkomponenten außerhalb der Anregungseinheit 40 zu reduzieren. Diese können auf mindestens zwei Seiten der Anregungseinheit 40 angeordnet sein um die Schwingungen zu dämpfen und um den Glättewerkzeughalter mit einem weiteren Halter 23, bzw. Dämpfer 22 zu verbinden. Der Halter 23 ist dazu vorgesehen, die Auftragseinheit 20 an Führungen zur Ausführung einer definierten Bewegung der Auftragseinheit 20 zu halten, wobei bevorzugter Weise der Halter 23 als Dämpfungseinheit 22 oder als Teil davon ausgeführt ist. Die Dämpfereinheit ist ferner dazu ausgestaltet den Halter 23 mit der Anregungseinheit 40 zu verbinden. Die Auftragseinheit 10 umfasst eine Anregungseinheit 20, wobei die Anregungseinheit 40 räumlich beweglich relativ zu der Pulverschicht 32 und/oder zu der Substratplattform 16 angeordnet ist. Die Anregungseinheit 40 kann eine Vibrationseinheit umfassen, die mittels Schwingungen die Anhaftungen der Pulverkörner 33 zueinander aufbricht. Die Anregungseinheit 40 kann oberhalb des Glättewerkzeughalters angebracht werden und ist mit diesem verbunden. Die gezeigte Ausführungsform umfasst ein Glättewerkzeug 21, welches eine Schleifeinheit, eine Silikon-Lippe, ein Kunststoffbalken, eine Bürste und/oder eine Metallkante umfassen kann. Das Material der Schleifeinheit sollte ein gewisser Härtegrad aufweisen, welches für Ultraschallschleifen und/oder Polieren geeignet ist, wobei bevorzugter Weise die Schleifeinheit ein herkömmlicher Schleifstein ist. Die Schleifeinheit kann z.B. aus Keramik sein. Die Auftragseinheit 20 trägt eine oder mehrere Pulverschichten auf die Substratplattform 16 (wenn es um die erste Schicht handelt) und ansonsten auf bereits von der Anlage behandelte Pulverschichten 32 auf. Eine bereits von der Anlage 10 behandelte Pulverschicht umfasst daher die bisher bereits gelaserte (geformte) mehrdimensionale Struktur.

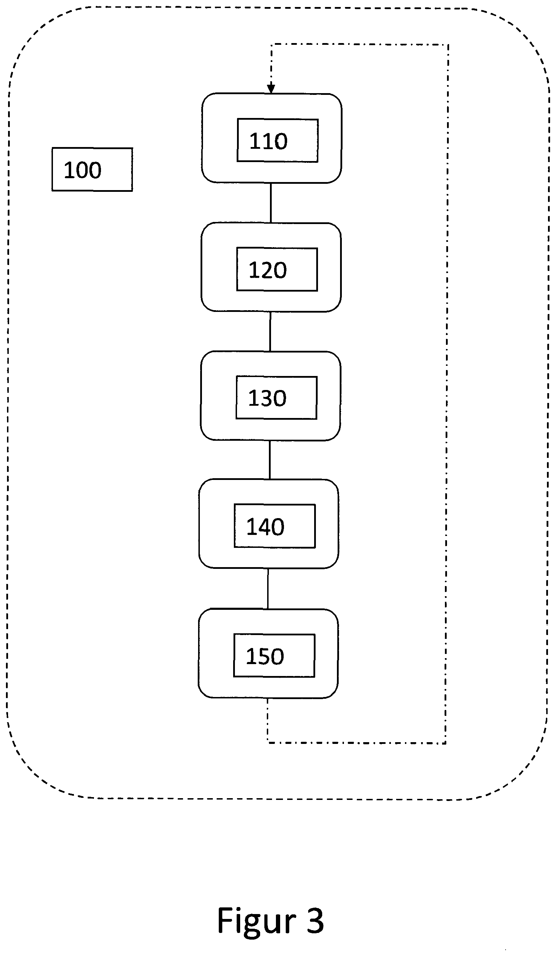

Figur 3 zeigt ein erfindungsgemäßes Verfahren 100 zum additiven Herstellen von mehrdimensionalen Strukturen durch eine erfindungsgemäße Anlage 10, umfassend eine räumlich bewegliche Auftragseinheit 20 für Pulver 30, ein Pulversystem 35 zur Bereitstellung des Pulvers und eine Steuereinheit 50 zur Steuerung zumindest der Auftragseinheit 20 und des Pulversystems 35. Das Pulversystem 35 umfasst dabei mindestens einen ersten Pulverbehälter 36 und einen zweiten Pulverbehälter 39. Das Verfahren 100 umfassend ein Bereitstellen 110 eines temporären Pulvervorrats 33 und eines temporären Überlaufbehälters jeweils alternierend durch den ersten 36 und den zweiten Pulverbehälter 39; ein Bewegen 120 der Auftragseinheit 20 vom jeweiligen Pulvervorrat 33 in Richtung des jeweiligen Überlaufbehälters 38 durch die Steuereinheit 50; ein Auftragen 130 einer oder mehrere Pulverschichten in einer Auftragungsebene 15 auf eine Substratplattform 16 oder auf einer bereits mit der Anlage behandelten Pulverschicht anhand des durch den Pulvervorrat 33 bereitgestellten Pulvers 30, wobei die Substratplattform 16 zwischen dem Pulvervorrat 33 und dem Überlaufbehälter 38 angeordnet ist; ein Aufnehmen 140 von überschüssigem Pulver 34 nach dem Auftragen durch die Auftragseinheit 20 in Bewegungsrichtung gesehen über die Substratplattform 16 hinaus durch den Überlaufbehälter 38; ein Bewegen 150 der Auftragseinheit 20 in umgekehrter Richtung, wobei der vormalige Überlaufbehälter 38 nun als Pulvervorrat 33 verwendet wird, zu dem vormaligen Pulvervorrat 33, der nun als Überlaufbehälter 38 verwendet wird. Die Schritte 110 bis 150 können beliebig oft wiederholt werden bis die mehrdimensionale Struktur hergestellt ist.

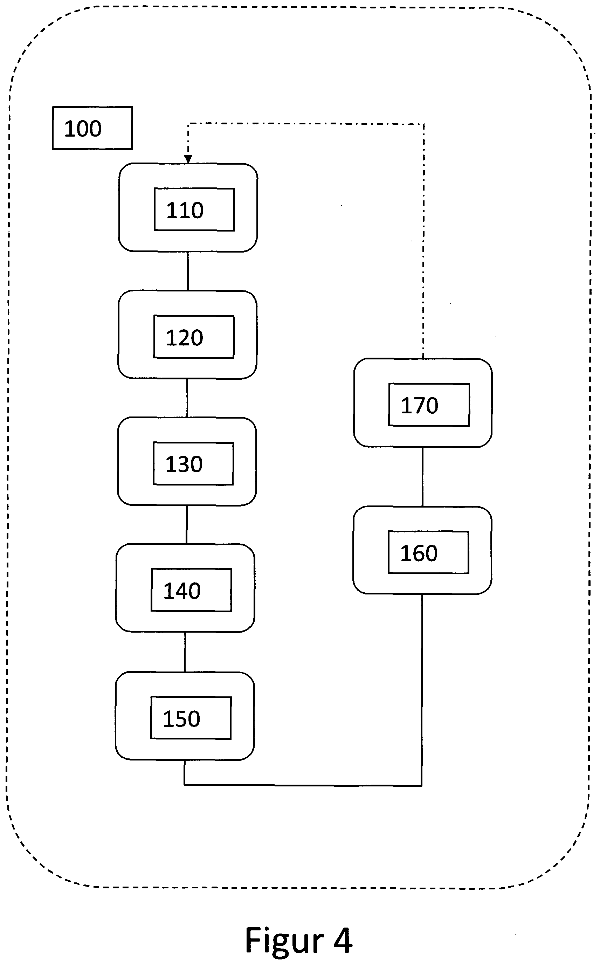

Figur 4 zeigt eine Ausführungsform des in Figur 3 veranschaulichten erfindungsgemäßen Verfahrens. Das Verfahren 100 umfasst ferner einen weiteren Schritt eines Absenkens 160 der Substratplattform 16 durch die Steuereinheit 50 um eine Dicke der gerade aufgetragenen Pulverschicht nach jedem auftragenden Passieren der Auftragseinheit 20. Weiterhin umfasst das Verfahren 100 einen weiteren Schritt eines Aufbrechens 170 von Anhaftungen einzelner Pulverkörner zueinander und/oder zu einer bereits mit der Anlage behandelten Pulverschicht durch eine Anregungseinheit während des Auftragens des Pulvers, sodass die Auftragseinheit 20 eine glatte Pulverschicht auf die Substratplattform 16 und/oder auf die vorherige Pulverschicht auftragen kann. Die oben genannten Schritte können beliebig wiederholt werden, bis die mehrdimensionale Struktur fertig hergestellt ist.

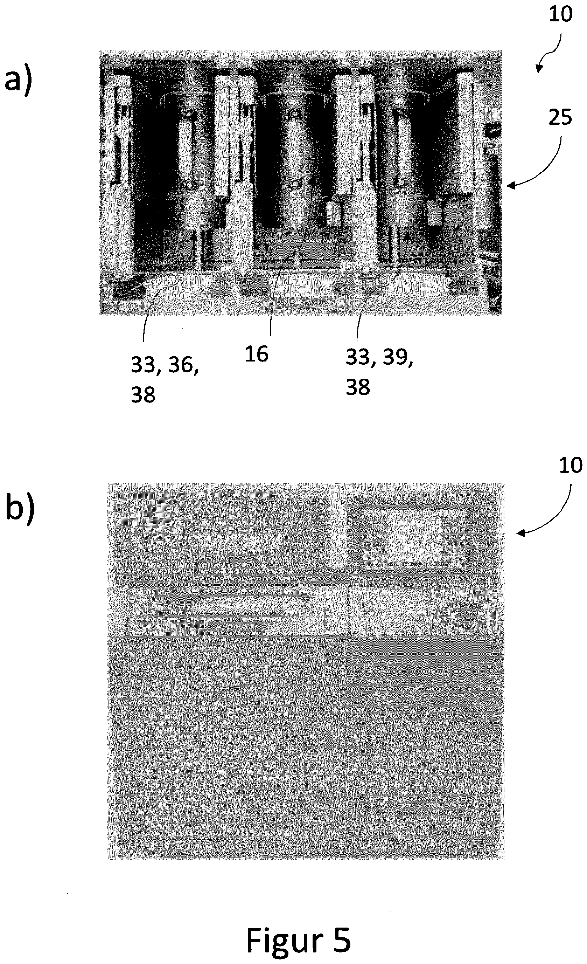

Figur 5 a) zeigt ein erfindungsgemäßes Pulversystem 25 mit einem ersten Pulverbehälter 36 und einem zweiten Pulverbehälter 39, die beide als Pulvervorrat 33 und Überlaufbehälter 38 fungieren und ein Behälter umfassend der Substratplattform 16 (nicht gezeigt), welches in der erfindungsgemäßen Anlage 10 für die Verbesserung der Pulvernutzungseffizienz integriert ist.

Figur 5 b) zeigt eine Ausführung einer erfindungsgemäße Anlage 10 in einer Frontalansicht.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Bezugszeichenliste:

- 10: erfindungsgemäße Anlage
- 15: Auftragsebene
- 16: Substratplattform
- 20: Auftragseinheit
- 21: Glättewerkzeug
- 22: Dämpfungseinheit
- 23: Halter
- 24: Glättewerkzeughalter
- 25: Auftragsrichtung
- 30: Pulver
- 33: Pulvervorrat
- 34: überschüssiges Pulver
- 35: Pulversystem
- 36: erster Pulverbehälter
- 37: fahrbare Pulverfördereinheit
- 38: Überlaufbehälter
- 39: zweiter Pulverbehälter
- 40: Anregungseinheit
- 50: Steuereinheit
- 100: erfindungsgemäßes Verfahren
- 110... 170: Schritte nach einem erfindungsgemäßen Verfahren

## Patentansprüche

1. Eine Anlage (10) zum additiven Herstellen von mehrdimensionalen Strukturen umfassend eine räumlich bewegliche Auftragseinheit (20) für Pulver (30), ein Pulversystem (35) zur Bereitstellung des Pulvers (30) und eine Steuereinheit (50) zur Steuerung zumindest der Auftragseinheit (20) und des Pulversystems (35),
wobei die Auftragseinheit (20) dazu vorgesehen ist, eine oder mehrere Pulverschichten in einer Auftragungsebene (15) auf eine Substratplattform (16) oder auf einer bereits mit der Anlage behandelten Pulverschicht aufzutragen,
wobei das Pulversystem (35) mindestens einen ersten Pulverbehälter (36) und einen zweiten Pulverbehälter (39) umfasst, die dazu vorgesehen sind, jeweils alternierend das aufzutragende Pulver als temporärer Pulvervorrat (33) bereitzustellen bzw. überschüssiges Pulver nach dem Auftragen über die in Bewegungsrichtung der Auftragseinheit (20) gesehen zwischen dem ersten und zweiten Pulverbehälter (36, 39) angeordnete Substratplattform (16) hinaus als temporärer Überlaufbehälter (38) aufzunehmen,
wobei die Steuereinheit (50) dazu vorgesehen ist, die Auftragseinheit (20) vom ersten Pulverbehälter (36) als Pulvervorrat (33) über die Substratplattform (16) und den zweiten Pulverbehälter (39) als Überlaufbehälter (38) zu bewegen und von dort in umgekehrter Richtung die Auftragseinheit (20) vom zweiter Pulverbehälter (39), der dafür nun als Pulvervorrat (33) verwendet wird, über die Substratplattform (16) und den ersten Pulverbehälter (36), der nun als Überlaufbehälter (38) verwendet wird, zu bewegen.

2. Die Anlage (10) nach Anspruch 1, wobei die Pulverbehälter (36, 39) jeweils eine fahrbare Pulverfördereinheit (37) umfassen, die von der Steuereinheit (50) gesteuert je nach Funktionsweise des jeweiligen Pulverbehälters (36, 39) als temporären Pulvervorrat (33) oder Überlaufbehälter (38) nach oben oder unten fährt.

3. Die Anlage (10) nach Anspruch 1 oder 2, wobei die Substratplattform (16) von der Steuereinheit (50) gesteuert nach jedem Auftragen um die gerade aufgetragene Schicht nach unten gesenkt wird.

4. Die Anlage (10) nach einem der vorangehenden Ansprüche, wobei die Anlage (10) eine Anregungseinheit (40) umfasst, die dazu vorgesehen ist, beim Auftragen des Pulvers Anhaftungen einzelner Pulverkörner zueinander und/oder zu einer bereits mit der Anlage behandelten Pulverschicht aufzubrechen, sodass die Auftragseinheit (20) eine glatte Pulverschicht auf die Substratplattform (16) und/oder auf die vorherige Pulverschicht auftragen kann.

5. Die Anlage nach Anspruch 4, wobei die Auftragseinheit (20) die Anregungseinheit (40) umfasst.

6. Die Anlage (10) nach einem der vorangehenden Ansprüche, wobei ein erstes Material im ersten Pulverbehälter (36) und ein zweites Material im zweiten Pulverbehälter (39) vor dem Auftragen bereitgestellt sind, wobei das erste Material gleich dem zweiten Material ist oder das erste Material unterschiedlich vom zweiten Material ist.

7. Die Anlage (10) nach einem der vorangehenden Ansprüche, wobei die Menge an befördertem Pulver oberhalb der Auftragungsebene des Pulvervorrats (36, 39) eine Schichtdicke von einem Faktor größer gleich 1.2, besonders einem Faktor 2, besonders bevorzugt einem Faktor 3 oder 4, einer Schichtdicke einer aufgetragenen und/oder aufzutragenden Pulverschicht auf der Substratplattform (16) entspricht.

8. Ein Verfahren (100) zum additiven Herstellen von mehrdimensionalen Strukturen durch eine Anlage (10) gemäß einem der voranstehenden Ansprüche, umfassend eine räumlich bewegliche Auftragseinheit (20) für Pulver (30), ein Pulversystem (35) zur Bereitstellung des Pulvers und eine Steuereinheit (50) zur Steuerung zumindest der Auftragseinheit (20) und des Pulversystems (35), wobei das Pulversystem (35) mindestens einen ersten Pulverbehälter (36) und einen zweiten Pulverbehälter (39) umfasst, umfassend die Schritte:
- Bereitstellen (110) eines temporären Pulvervorrats (33) und eines temporären Überlaufbehälters (38) jeweils alternierend durch den ersten (36) und den zweiten Pulverbehälter (39);
- Bewegen (120) der Auftragseinheit (20) vom jeweiligen Pulvervorrat (33) in Richtung des jeweiligen Überlaufbehälters (38) durch die Steuereinheit (50);
- Auftragen (130) einer oder mehrere Pulverschichten in einer Auftragungsebene (15) auf eine Substratplattform (16) oder auf einer bereits mit der Anlage behandelten Pulverschicht anhand des durch den Pulvervorrat (33) bereitgestellten Pulvers (30), wobei die Substratplattform (16) zwischen dem Pulvervorrat (33) und dem Überlaufbehälter (38) angeordnet ist;
- Aufnehmen (140) von überschüssigem Pulver (34) nach dem Auftragen durch die Auftragseinheit (20) in Bewegungsrichtung gesehen über die Substratplattform (16) hinaus durch den Überlaufbehälter (38); und
- Bewegen (150) der Auftragseinheit (20) in umgekehrter Richtung, wobei der vormalige Überlaufbehälter (38) nun als Pulvervorrat (33) verwendet wird, zu dem vormaligen Pulvervorrat (33), der nun als Überlaufbehälter (38) verwendet wird.

9. Das Verfahren (100) nach Anspruch 8, umfassend einen weiteren Schritt eines Absenkens (160) der Substratplattform (16) durch die Steuereinheit (50) um eine Dicke der gerade aufgetragenen Pulverschicht nach jedem auftragenden Passieren der Auftragseinheit (20).

10. Das Verfahren (100) nach einem der Ansprüche 8 - 9, umfassend einen weiteren Schritt eines Aufbrechens (170) von Anhaftungen einzelner Pulverkörner zueinander und/oder zu einer bereits mit der Anlage behandelten Pulverschicht durch eine Anregungseinheit während des Auftragens des Pulvers, sodass die Auftragseinheit (20) eine glatte Pulverschicht auf die Substratplattform (16) und/oder auf die vorherige Pulverschicht auftragen kann.

11. Das Verfahren (100) nach einem der Ansprüche 8 - 10, wobei die Schritte (110 - 170) wiederholt werden, bis die mehrdimensionale Struktur fertig hergestellt ist.
